# Europäisches Patentamt

# European Patent Office

# Office européen des brevets

(11) Veröffentlichungsnummer: **0 164 617**

**A1**

(12) **EUROPÄISCHE PATENTANMELDUNG**

(21) Anmeldenummer: 85106200.0

(22) Anmeldetag: 21.05.85

(51) Int. Cl.⁴: **C 23 C 4/04**
C 23 C 4/02, C 08 J 7/06

(30) Priorität: 28.05.84 DE 3419856

(43) Veröffentlichungstag der Anmeldung:
18.12.85 Patentblatt 85/51

(84) Benannte Vertragsstaaten:
AT BE CH DE FR GB IT LI LU NL SE

(71) Anmelder: HOECHST AKTIENGESELLSCHAFT
Postfach 80 03 20
D-6230 Frankfurt am Main 80(DE)

(72) Erfinder: Rittner, Siegbert, Dr.
Kornblumenweg 5
D-6082 Mörfelden-Walldorf(DE)

(72) Erfinder: Morach, Eugen
Höhenweg 6
D-6237 Liederbach(DE)

(72) Erfinder: Schindler, Hubert
Hauptstrasse 134
D-6239 Eppstein/Taunus(DE)

(72) Erfinder: John, Peter
Sachsenring 6
D-6238 Hofheim am Taunus(DE)

(54) Verfahren zur Verbesserung des Benetzungsverhaltens der Oberfläche von Kunststoff-Formteilen für verfahrenstechnische Anwendungen.

(57) Durch eine auf die besonderen Eigenschaften des Kunststoffes abgestimmte Flamm-oder Plasmaspritztechnik gelingt es, unverstärkte Kunststoffe nicht nur mit einer gleichmäßigen Beschichtung auszurüsten, sondern auch gleichzeitig eine hervorragende hydrophile Oberflächenbenetzbarkeit zu erzielen.

EP 0 164 617 A1

Croydon Printing Company Ltd.

Verfahren zur Verbesserung des Benetzungsverhaltens der
Oberfläche von Kunststoff-Formteilen für verfahrenstechnische Anwendungen

Es ist bekannt, daß verfahrenstechnische Apparate und Anlagen, in denen Kühl- und/oder Heizvorgänge mit Hilfe eines
flüssigen Mediums ablaufen, aus Werkstoffen gefertigt werden müssen, die eine gute Benetzbarkeit besitzen. Bei vielen verfahrenstechnischen Apparaten, wie beispielsweise
Kühlern, Verdampfern, Wärmetauschern, Absorbern, Kristallisatoren, Reaktoren für chemische Reaktionen und dergleichen, welche man meistens aus metallischen Werkstoffen
oder aus Glas oder Email herstellt, wird eine ausgezeichnete
bis zufriedenstellende Benetzbarkeit gegenüber wäßrigen
Systemen erreicht. Bisher scheiterte der Einsatz von Kunststoffen weitgehend an der ungleichmäßigen bis schlechten
Benetzbarkeit bei dieser Werkstoffgruppe. Trotz teilweise
hervorragender Korrosionseigenschaften und preislicher Vorteile gegenüber anderen Werkstoffen fanden Kunststoffe noch
keinen Zugang zu speziellen Apparaten der Verfahrenstechnik, in denen ein Wärmeaustausch über einen Rieselfilm erfolgt, wie beispielsweise Rieselfilmkühlern, Rieselfilmwärmetauschern, Rieselfilmverdampfern, Rieselfilmabsorbern
oder Rieselfilmkristallisatoren.

Versuche, eine gute Benetzbarkeit gegenüber wäßrigen Systemen auf Kunststoffen für verfahrenstechnische Anwendungen
durch mechanische Oberflächenveränderung, beispielsweise
durch Galvanisierung oder Aufdampfen von Metallen im Vakuum, zu erzielen, blieben erfolglos bis unbefriedigend, da
entweder nur sehr dünne Schichten erreicht wurden oder die
aufgebrachten Schichten nicht genügend hafteten bzw. nur
sehr kleine Werkstücke beschichtbar waren. Metallisierungen
von Kunststoffen durch thermisches Spritzen sind daher nur
auf Bauteilen aus Glasfaserkunststoff oder Polyurethanschaum für dekorative Zwecke bzw. gegen elektrostatische

- 2 -                                    0164617

Aufladungen beschränkt geblieben (vgl. DVS-Bericht Band 47
(1977), Seite 60-62).

Es wurde nun eine auf die besonderen Eigenschaften des
Kunststoffes abgestimmte Beschichtungstechnik gefunden, die
es gestattet, unverstärkte Kunststoffe nicht nur mit einer
gleichmäßigen Beschichtung auszurüsten, sondern auch
gleichzeitig eine hervorragende Oberflächenbenetzbarkeit zu
erzielen.

Gegenstand der Erfindung ist daher ein Verfahren zur Verbesserung des Benetzungsverhaltens der Oberfläche von
Kunststoff-Formteilen für verfahrenstechnische Anwendungen
durch Aufspritzen einer Metallschicht auf die Oberfläche,
dadurch gekennzeichnet, daß man die Oberfläche des Kunststoff-Formteils mit einer Heizflamme zunächst auf eine
Temperatur erhitzt, welche 10 bis 150°C über dem Erweichungspunkt bzw. Kristallitschmelzpunkt des Polymeren
liegt, und sodann auf die Oberfläche ein pulverförmiges
metallisches oder metallabscheidendes Spritzgut mit einer
Korngröße von 1 bis 600 µm und einer Temperatur von 20 bis
700°C unter einem Druck von 0,1 bis 4,0 bar aufbringt.

Bei dem erfindungsgemäßen Verfahren wird die Oberfläche
des Kunststoff-Formteils zunächst mit einem Flammspritz-
oder Plasmabrenner auf eine Temperatur erhitzt, welche 10
bis 150°C über dem Erweichungspunkt bzw. Kristallitschmelzpunkt des Polymeren liegt. Sie hat im allgemeinen eine Temperatur von 130 bis 350°C.

Sodann wird ein pulverförmiges metallisches oder metallabscheidendes Spritzgut unter einem Druck von 0,1 bis 4,0
bar, vorzugsweise 0,2 bis 1,0 bar und mit einer Temperatur
von 20 bis 700°C, vorzugsweise 20 bis 100°C aufgebracht.
Das Aufbringen des Spritzgutes geschieht in der Regel mittels eines Gasstromes. Nur bei hohem Temperaturen wird ein
Brenner verwendet.

Als Spritzgut eignen sich Pulver von Metallen und Metall-Legierungen, von Metallcarbiden und Metalloxiden. Diese Pulver können einzeln und im Gemisch angewendet werden, auch die Verwendung von umhüllten Pulvern ist möglich. Das Spritzgut hat eine Korngröße von 1 bis 600 µm, vorzugsweise 2 bis 400 µm, insbesondere 5 bis 200 µm. Die Menge des Spritzgutes wird so bemessen, daß die Oberfläche des Kunststoff-Formteils weitgehend, jedoch nicht lückenlos bedeckt ist. Bei vollständiger Bedeckung besteht die Gefahr, daß die Beschichtung je nach der Größe des Temperaturintervalls wegen der unterschiedlichen Wärmedehnung von Kunststoff und Beschichtung reißen kann.

Mittels des erfindungsgemäßen Verfahrens können alle im Apparatebau üblichen Kunststoffe beschichtet werden, beispielsweise Polyethylen hoher Dichte, Polypropylen, Polyvinylchlorid, Polyvinylidenfluorid, Polytetrafluorethylen.

Bevorzugt werden Polypropylen und Polytetrafluorethylen beschichtet.

Während bei Anwendung des herkömmlichen Flamm- oder Plasmaspritzverfahrens die in der Heizflamme aufgeschmolzenen und auf die Kunststoffoberfläche aufgetragenen pulverförmigen Spritzzusätze dort nicht haften, gelingt es nach dem erfindungsgemäßen Zweistufenverfahren, eine gut haftende Metallschicht auf dem Kunststoff herzustellen. Mit der erfindungsgemäßen Zweistufen-Beschichtungstechnik kann auch der z.Z. besonders interessante und bisher als unbeschichtbar geltende Kunststoff Polypropylen mit einer fest haftenden Metallschicht oberflächenveredelt werden und wird somit gleichzeitig hervorragend benetzbar.

Von besonderem Vorteil ist beim erfindungsgemäßen Verfahren auch, daß zum Spritzgut keine zusätzlichen Bindemittelzusätze, wie beispielsweise Kunststoffpulver, verwendet werden müssen. Es tritt auch keine Beeinflussung gasempfindlicher Metalle, wie z.B. Titan, durch übermäßiges Erwärmen auf. Dadurch wird eine gute Abstimmung der Spritzschicht

0164617

auf die jeweiligen Korrosionsbedingungen erreicht, was eine kostengünstige Auftragsmethode insbesondere für die Beschichtung großer Werkstücke für verfahrenstechnische Apparate bedeutet.

Das erfindungsgemäße Verfahren ist im Apparatebau für die Verfahrenstechnik von großer Bedeutung, da verschiedene Apparate aufgrund korrosiver Reaktionsmedien aus teuren und teilweise schwer verarbeitbaren Metallen bestanden, nun durch billigere korrosionsbeständige Kunststoff-Formteile ergänzt oder ganz aus ihnen hergestellt werden können.

Die nachfolgenden Beispiele und Figuren sollen das erfindungsgemäße Verfahren näher erläutern.

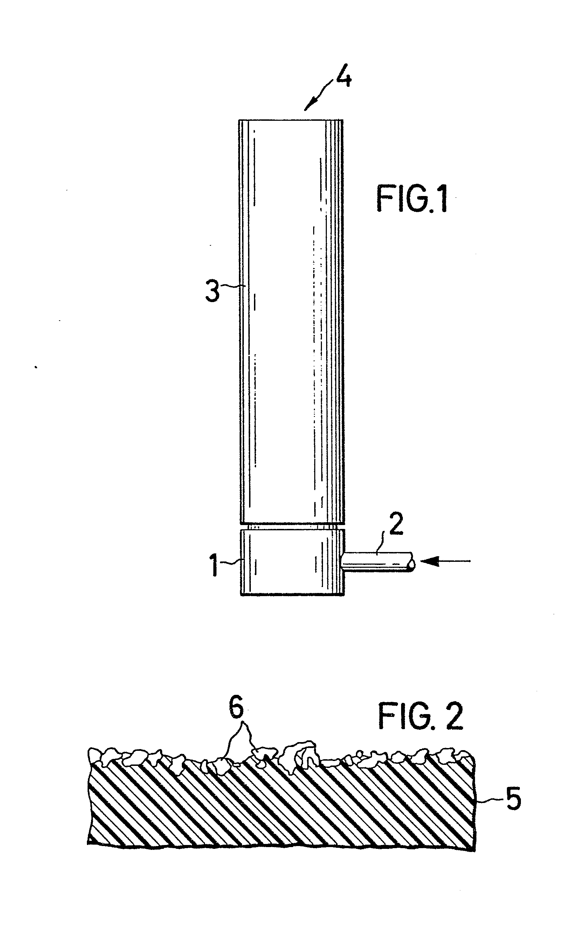

Figur 1 zeigt die Einrichtung zur Prüfung der Benetzbarkeit.
Figur 2 zeigt einen senkrechten Schnitt durch die Wandung eines Kunststoff-Formteils.
Figuren 3 bis 6 zeigen Kunststoff-Rohre während der Prüfung der Benetzbarkeit.
Für die Prüfung der Benetzbarkeit gemäß Figur 1 wurde ein oben offener Becher (1), welcher einen seitlichen Zulauf (2) besaß, verwendet. Auf den Becher (1) wurde ein Kunststoffrohr (3) aufgesetzt. Durch den Zulauf (2) wurde Wasser eingeleitet, welches im Rohr (3) hochstieg und am oberen Ende (4) über den Rand lief. Je nach Benetzbarkeit der Rohraußenfläche bildete das herablaufende Wasser ein Rinnsal oder einen mehr oder weniger geschlossenen Film.

Das Benetzungsverhalten wurde nach folgender Bewertungsskale vorgenommen

| Bezeichnung | Benetzungsverhalten |
| --- | --- |
| +++ | sehr gut |
| ++(+) | gut |
| ++(−) | ausreichend |
| −−(−) | mangelhaft |
| | (Rinnsalbildung) |

Beispiel 1

Ein Rohr aus Polypropylen (Dichte 0,902 g/cm³, MFI 230/5 1,2 g/10 min) mit den Abmessungen 90 mm äußerer Durchmesser x 9 mm Wandstärke x 800 mm Länge wurde mit einem Flammspritzbrenner an der Kunststoffoberfläche gleichmäßig leicht angeschmolzen (T ca. 200°C). Anschließend wurde in einem zweiten Verfahrensschritt mittels eines Luftstromes bei Raumtemperatur ein Cr/Ni-Pulver mit einer durchschnittlichen Korngröße von 45 bis 120 µm bei einem Druck von ca. 0,3 bar kontinuierlich auf die Rohroberfläche aufgebracht. Anschließende metallographische Querschliffe und Biegeversuche bestätigten die gute Haftung auf dem Kunststoffrohr. Figur 2 zeigt einen derartigen Querschliff, bei welchem die Wandung (5) des Kunststoffrohres (3) und die darin teilweise eingebetteten Metallpartikel (6) erkennbar sind. Die Figur zeigt außerdem, daß die Metallpartikel (6) die Oberfläche des Kunststoffrohres (3) nicht vollständig bedecken. Die Ergebnisse der Prüfung der Benetzbarkeit sind in der Tabelle zusammengestellt.

Beispiel 2

Das gleiche Polypropylen-Rohr wie in Beispiel 1 wurde mit einem pulverförmigen Spritzzusatz Ni 99,3 nach DIN 32 529 im Kornbereich 5,6 bis 45 µm analog Beispiel 1 beschichtet (vgl. die Tabelle).

Beispiel 3

Ein Rohr aus Polyethylen hoher Dichte (Dichte 0,953 g/cm³, MFI 190/5 0,5 g/10 min) mit den Abmessungen 91 mm äußerer Durchmesser x 8,5 mm Wandstärke wurde mit einem pulverförmigen Spritzzusatz Al 99 nach DIN 32529 mit einer Korngröße von 45-70 µm analog Beispiel 1 beschichtet (vgl. die Tabelle).

Beispiel 4

Ein Polytetrafluorethylen-Stab mit einem Durchmesser von 40 mm wurde einem pulverförmigen Spritzzusatz CrNi-Stahl 316 L mit einer Korngröße von 45 bis 120 µm, analog Beispiel 1 beschichtet (vgl. die Tabelle).

Vergleichsbeispiel

Die Beschichtung der Polypropylen-Rohre, wie im Beispiel 1 verwendet, nach dem konventionellen Plasmaspritzverfahren – Zugabe des CrNi-Spritzzusatzes direkt in die Heizflamme – kam nicht zustande, da der Spritzwerkstoff an der Kunststoffrohr-Oberfläche lediglich abprallte (vgl. die Tabelle).

Tabelle

Ergebnisse der Prüfung der Benetzbarkeit

| Nr. des Beispiels | Kunststoff | Spritzgut | | Bewertung der Benetzbarkeit |
|---|---|---|---|---|
| | | Material | Korngröße | |
| 1 | Polypropylen | CrNi-Stahl | 45–120 µm | +++ |
| 2 | Polypropylen | Ni 99,3 | 5,6–45 µm | ++(+) |
| 3 | HD-Polyethylen | Al 99 | 45–70 µm | ++(+) |
| 4 | Polytetrafluorethylen | CrNi-Stahl | 45–120 µm | ++(+) |
| Vergleichsbeispiel | Polypropylen | CrNi-Stahl | 45–120 µm | —(–) |
| | Polypropylen | unbeschichtet | | —(–) |

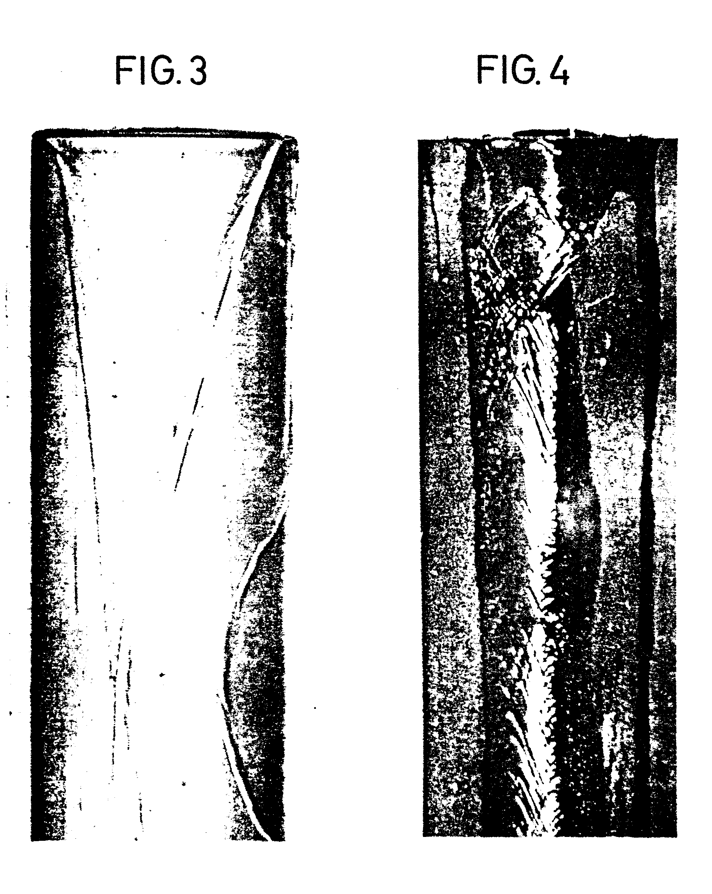

In Figur 3 wird die schlechte Benetzbarkeit eines unbeschichteten Polypropylenrohres demonstriert. Das Wasser läuft in Rinnsalen an der Rohrwandung herab.
Die Figuren 4, 5 und 6 zeigen die gute Benetzbarkeit des beschichteten Polypropylenrohres gemäß Beispiel 1.

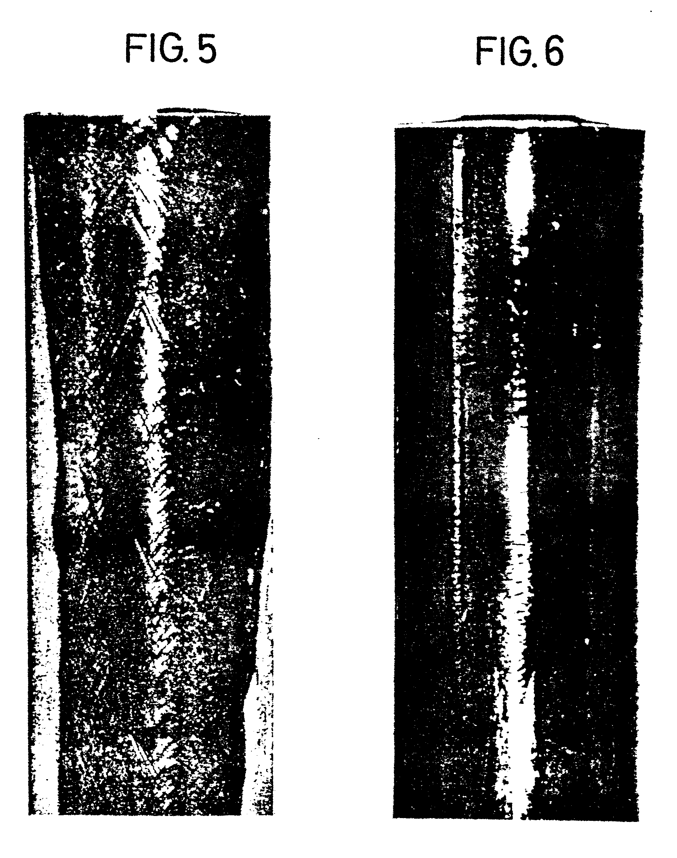

Figur 4 zeigt den Beginn des Wasserüberlaufs, Figur 5 die fortschreitende Benetzung der Rohroberfläche und in Figur 6 bildet das Wasser einen gleichmäßigen Film.

Patentansprüche:

1. Verfahren zur Verbesserung des Benetzungsverhaltens der Oberfläche von Kunststoff-Formteilen für verfahrenstechnische Anwendungen durch Aufbringen einer Metallschicht auf die Oberfläche, dadurch gekennzeichnet,, daß man die Oberfläche des Kunststoff-Formteils mit einer Heizflamme zunächst auf eine Temperatur erhitzt, welche 10 bis 150°C über dem Erweichungspunkt bzw. Kristallitschmelzpunkt des Polymeren liegt, und sodann auf die Oberfläche ein pulverförmiges metallisches oder metallabscheidendes Spritzgut mit einer Korngröße von 1 bis 600 μm und einer Temperatur von 20 bis 700°C unter einem Druck von 0,1 bis 4,0 bar aufbringt.

2. Verfahren nach Anspruch 1, dadurch gekennzeichnet, daß man als Spritzgut reine Metalle, Metall-Legierungen, Metalloxide, Metallcarbide, Pulvergemische oder umhüllte Pulver verwendet.

3. Verfahren nach Anspruch 1, dadurch gekennzeichnet, daß man das Spritzgut auf der Oberfläche von Rohren abscheidet.

4. Verfahren nach Anspruch 1, dadurch gekennzeichnet, daß man Cr/Ni-Pulver verwendet.

5. Verfahren und Anspruch 1, dadurch gekennzeichnet, daß man Polypropylenrohre beschichtet.

6. Kunststoff-Formteil mit verbessertem Benetzungsverhalten der Oberfläche, dadurch gekennzeichnet, daß die Oberfläche weitgehend mit einem pulverförmigen metallischen oder metallabscheidenden Spritzgut mit einer Korngröße von 1 bis 600 μm bedeckt ist.

Patentansprüche Österreich:

1. Verfahren zur Verbesserung des Benetzungsverhaltens der Oberfläche von Kunststoff-Formteilen für verfahrenstechnische Anwendungen durch Aufbringen einer Metallschicht auf die Oberfläche, dadurch gekennzeichnet, daß man die Oberfläche des Kunststoff-Formteils mit einer Heizflamme zunächst auf eine Temperatur erhitzt, welche 10 bis 150°C über dem Erweichungspunkt bzw. Kristallitschmelzpunkt des Polymeren liegt, und sodann auf die Oberfläche ein pulverförmiges metallisches oder metallabscheidendes Spritzgut mit einer Korngröße von 1 bis 600 µm und einer Temperatur von 20 bis 700°C unter einem Druck von 0,1 bis 4,0 bar aufbringt.

2. Verfahren nach Anspruch 1, dadurch gekennzeichnet, daß man als Spritzgut reine Metalle, Metall-Legierungen, Metalloxide, Metallcarbide, Pulvergemische oder umhüllte Pulver verwendet.

3. Verfahren nach Anspruch 1, dadurch gekennzeichnet, daß man das Spritzgut auf der Oberfläche von Rohren abscheidet.

4. Verfahren nach Anspruch 1, dadurch gekennzeichnet, daß man Cr/Ni-Pulver verwendet.

5. Verfahren und Anspruch 1, dadurch gekennzeichnet, daß man Polypropylenrohre beschichtet.

0164617

FIG.1

FIG. 2

FIG. 3

FIG. 4

# FIG. 5

# FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | GB-A- 860 648 (STANDARD TELEPHONES AND CABLES) * Patentansprüche 1-4 * | 1-4,6 | C 23 C 4/04 C 23 C 4/02 C 08 J 7/06 |
| Y | GB-A-1 079 391 (WLADIMIR TUR) * Patentanspruch 1; Seite 2, Zeile 65 * | 1-4,6 | |
| A | EP-A-0 027 625 (RUHRCHEMIE A.G.) * Patentansprüche 1,5-12 * | 1-6 | |
| A | FR-A-1 197 122 (CLAREL) * Patentansprüche 1,2 * | 1,2,6 | |
| A | IBM TECHNICAL DISCLOSURE BULLETIN, vol. 19, no. 6, 6. November 1976, Seite 2180-2181, IBM CORPORATION, New York, US; E.P. DAMM et al.: "Production of metal surfaces on plastic parts" * Seite 2180, Technik 2 * | 1,2,6 | RECHERCHIERTE SACHGEBIETE (Int. Cl.4) |
| A | DE-A-2 102 531 (METALLGESELLSCHAFT) * Beispielen 1,2,6 * | 1,2,6 | C 23 C C 23 D C 08 J B 22 F |
| A | US-A-3 669 719 (C.M. DOEDE) * Patentansprüche 1,2,6; Beispiel III * | 1,2,5,6 | |

--- -/-

Der vorliegende Recherchenbericht wurde für alle Patentansprüche erstellt.

| Recherchenort | Abschlußdatum der Recherche | Prüfer |
|---|---|---|
| DEN HAAG | 03-09-1985 | ELSEN D.B.A. |

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | EP-A-0 066 782  (METCO)<br>* Patentansprüche 1,4 * | 1,2,6 | |

-----

RECHERCHIERTE
SACHGEBIETE (Int Cl 4)

Der vorliegende Recherchenbericht wurde für alle Patentansprüche erstellt.

| Recherchenort<br>DEN HAAG | Abschlußdatum der Recherche<br>03-09-1985 | Prüfer<br>ELSEN D.B.A. |
|---|---|---|

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument

EPA Form 1503 03 82